# EUROPEAN PATENT APPLICATION

(11) **EP 2 442 563 A1**
(43) Date of publication of application: **18.04.2012**
(21) Application number: 10306129.7
(22) Date of filing: 15.10.2010
(51) Int. Cl.: H04N 7/167

(54) **Method for guaranteing watermark embedding by using bit stream corruption**

(71) Applicant: Thomson Licensing, 92130 Issy-les-Moulineaux (FR)
(72) Inventor: Robert, Antoine, 92443 Issy-Les-Moulineaux (FR); Doerr, Gwenael, 92443 Issy-Les-Moulineaux (FR); Durand, Alain, 92443 Issy-Les-Moulineaux (FR)
(74) Representative: Le Dantec, Claude

(57) **Abstract**

The invention relates to a method for preventing the bypassing of watermark embedding in a bit-stream (Cₒ) representative of audio/video data. The method is remarkable in that it comprises a step of corrupting (E100) the bit-stream wherein original blocks in the bit-stream are replaced by corrupted blocks producing a bit-stream (C_{c}) whose perceptual quality is degraded; and a step of simultaneously watermarking and repairing (E101) the corrupted bit-stream wherein corrupted blocks are replaced either by watermarked blocks or original blocks producing a repaired and watermarked bit-stream (C_{w}) whose perceptual quality is recovered.

The invention also relates to a device for watermarking and repairing (400) a corrupted bit-stream and to a device for preparing (500) a corrupted bit-stream, wherein the original bit-stream is representative of audio/video data.

## Description

### Field of the invention

The invention relates to guaranteeing watermark embedding in a bit-stream. More particularly the invention relates to a method for preventing the bypassing of watermark embedding in a bit-stream representative of audio/video data and associated devices.

### Back ground of the invention

Among many alternative copyrights managements systems, watermarking techniques hide binary information into multimedia content in a robust and imperceptible manner. The embedded information can be used during forensics analysis to identify the source of an illegal copy. However, should the watermark embedding step be bypassed, the identification mechanism would no longer be possible.

In this context, studios are reluctant to distribute premium video content if there is no guarantee that content flowing through end user devices (such as PC, gateways or video decoders) is watermarked with information identifying the device.

Known methods for embedding watermarks raise the issue of the insurance of the presence of the watermark in the resulting content. A method for preventing the bypassing of watermark embedding in a bit-stream is therefore needed.

### Summary of the invention

The purpose of the invention is to overcome at least one of the disadvantages of prior art by proposing a method preventing the bypassing of watermark embedding in a bit-stream. The idea of the invention is to corrupt the original bit-stream prior to watermark embedding so that a user cannot enjoy the content should it be rendered before the content repairing step. Then, the watermark embedding step repairs the corrupted bit-stream by substituting corrupted blocks by watermarks blocks so that the user's experience is preserved when presented with the repaired and watermarked bit-stream.

To this end, the invention relates to a method for preventing the bypassing of watermark embedding in a bit-stream representative of audio/video data. The method is remarkable in that it comprises a step of corrupting the bit-stream wherein original blocks in the bit-stream are replaced by corrupted blocks producing a bit-stream whose perceptual quality is degraded; and a step of simultaneously watermarking and repairing the corrupted bit-stream wherein corrupted blocks are replaced either by watermarked blocks or original blocks producing a repaired and watermarked bit-stream whose perceptual quality is recovered.

The invention is advantageously well adapted when a distribution step occurs between the bit-stream corruption and the watermarked and repaired bit-stream. The content provider, for instance providing the corrupted bit-stream is guaranteed that the content quality is degraded enough if presented to a user prior to the simultaneous watermark and repair step.

According to a particularly advantageous characteristic of the invention, the corrupted blocks positions are determined according to a watermarking algorithm. Such characteristic of the invention proposes a solution for selecting blocks to corrupt in the bit-stream guaranteeing the watermark embedding is not bypassed.

According to another advantageous characteristic, additional corrupted blocks positions are randomly determined among blocks carrying audio/video data. Thus those blocks are chosen among remaining so called essence blocks which have not yet been corrupted, i.e blocks which position does not correspond to the position of a watermarked block. Such characteristic of the invention advantageously masks the position of the watermarked blocks.

According to another particularly advantageous characteristic of the invention, the corrupted blocks values are determined among fixed values, random values or values derived from a watermarking algorithm. The value derived from a watermarking algorithm offer the advantage of determining a value having a high perceptual visual impact.

According to another particularly advantageous characteristic of the invention, the step of corrupting the bit-stream further comprises a step of generating metadata comprising, for each corrupted block, a value for each possible watermark symbol and a position. According to another characteristic, the metadata comprises for each additional corrupted block randomly selected, the original block value and a position. According to another characteristic, the metadata comprises for each corrupted block, the corrupted block value. Such characteristic of the invention proposes a solution to provide necessary information (block values and position) required for the second watermarking and repairing step.

According to a first embodiment, between the step of corrupting the bit-stream and the step of watermarking and repairing, the method further comprises a step of distributing the corrupted bit-stream. According to a second embodiment, between the step of corrupting the bit-stream and the step of watermarking and repairing, the method further comprises a step of distributing the corrupted bit-stream and the generated metadata.

According to another characteristic, the step of watermarking and repairing consists of replacing each corrupted block whose position is included in the metadata by one of the values also included in the metadata associated to that block. According to another characteristic, before the step of watermarking and repairing, the method further comprises a step of verifying that, for each corrupted position, the value of the block in the corrupted bit-stream and the value indicated in the metadata are equal. When the verification succeeds, the corrupted bit-stream is watermarked and repaired as previously described. When the verification fails, an action is taken to prevent the bit-stream from being presented. In a preferred embodiment, when the verification fails, the corrupted bit-stream is not watermarked and repaired; and a plurality of further additional blocks in the bit-stream are corrupted, further impairing the perceptual quality of the bit-stream. In a variant embodiment, when the verification fails, the method comprises a step of blocking the rendering of the bit-stream to a user. In yet another variant, the method comprises a step of sending a message to the content provider.

According to another aspect, the invention also relates to a device for watermarking and repairing a corrupted bit-stream, wherein the original bit-stream is representative of audio/video data. The device comprises means to derive an information to watermark; an embedder to watermark and repair the corrupted bit-stream wherein corrupted blocks are replaced either by watermarked blocks according to said information to watermark or original blocks thus producing a repaired and watermarked bit-stream whose perceptual quality is recovered.

According to another aspect, the invention also relates to a device for preparing a corrupted bit-stream, wherein the original bit-stream is representative of audio/video data. The device comprises means to apply a watermark algorithm to the original bit-stream determining, for each watermarked block, a value for each possible watermark symbol and a position ; means to replace original blocks in the bit-stream by corrupted blocks at the positions determined either by the watermark algorithm or at random, thus producing a bit-stream whose perceptual quality is degraded.

According to various embodiments, both the device for watermarking and repairing a corrupted bit-stream and the device for preparing a corrupted bit-stream, offer characteristics and advantages already presented for the method for preventing the bypassing of a watermark embedding which therefore are not repeated.

### Brief description of the drawings

Other characteristics and advantages of the invention will appear through the description of a non-limiting embodiment of the invention, which will be illustrated, with the help of the enclosed drawings.
- **Figure 1** represents the method for preventing the bypassing of watermarks embedding according to a particular embodiment;
- **Figures 2a****,** **2b, 2c** illustrate corrupted bit-stream and watermarked and/or repaired bit-stream according to three particular embodiments,
- **Figure 3** represents the method for preventing the bypassing of watermarks embedding according to another particular embodiment,
- **Figure 4** illustrates a device for watermarking and repairing a bit-stream according to a particular embodiment,
- **Figure 5** illustrates a device of preparing a corrupted bit-stream according to another particular embodiment.

### Detailed description of preferred embodiments

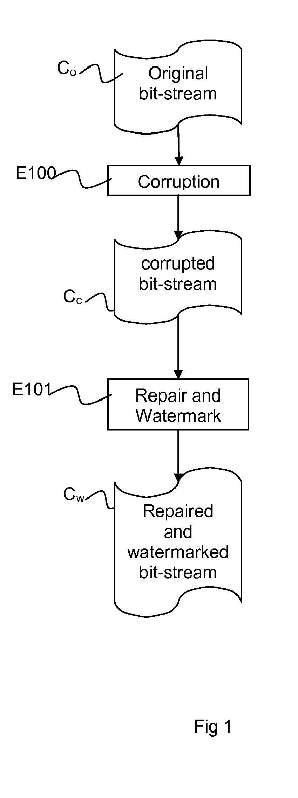

**Figure 1** represents the method for preventing the bypassing of watermarks embedding according to a particular embodiment. An original bit-stream Cₒ, representative of audio/video content is divided into elementary blocks. According to variant embodiments, the bit-stream consists of encoded video in h.264/MPEG2/MPEG4 format and/or encoded audio in mp3/AAC/AC3 format, possibly encapsulated in MPEG4, TS or M2TS packets. In a first step E100, the original bit-stream Cₒ is corrupted to produce a corrupted bit-stream C_{c} whose perceptual quality is degraded by modifying the value of some blocks in the original bit-stream. The skilled in the art will appreciate that the corrupted bit-stream resulting from step E100 is a generally a non-compliant bit-stream. The value of the corrupted block can be a constant value, a random value, or possibly derived from some prior information coming for instance from a watermarking algorithm. This corruption causes defaults, glitches, annoying visual artefacts that make it difficult for a user to enjoy the content should it be rendered without repairing the content first.

In a second step E101, the corrupted bit-stream C_{c} is simultaneously watermarked and repaired to produce a compliant bit-stream C_{w} whose perceptual quality is recovered. The value of each corrupted block is for instance replaced by the original value of the block or by some alternate value so as to encode a determined watermark symbol. As a result, this simultaneous watermark and repair step removes the perceptual quality degradation due to corruption.

According to a preferred embodiment, the bit-stream is corrupted by a content provider and the corrupted content is then distributed to the end user. In this setup, the content provider is guaranteed that distributed multimedia content will be watermarked (and repaired) so as to provide the end user with a pleasant experience.

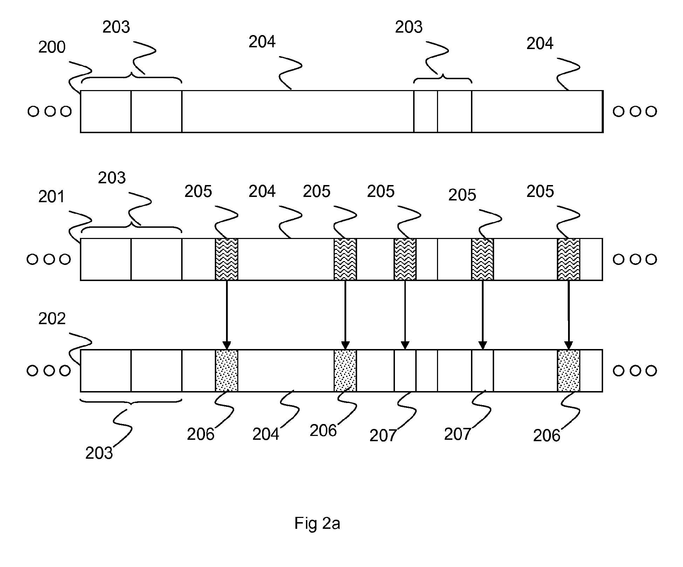

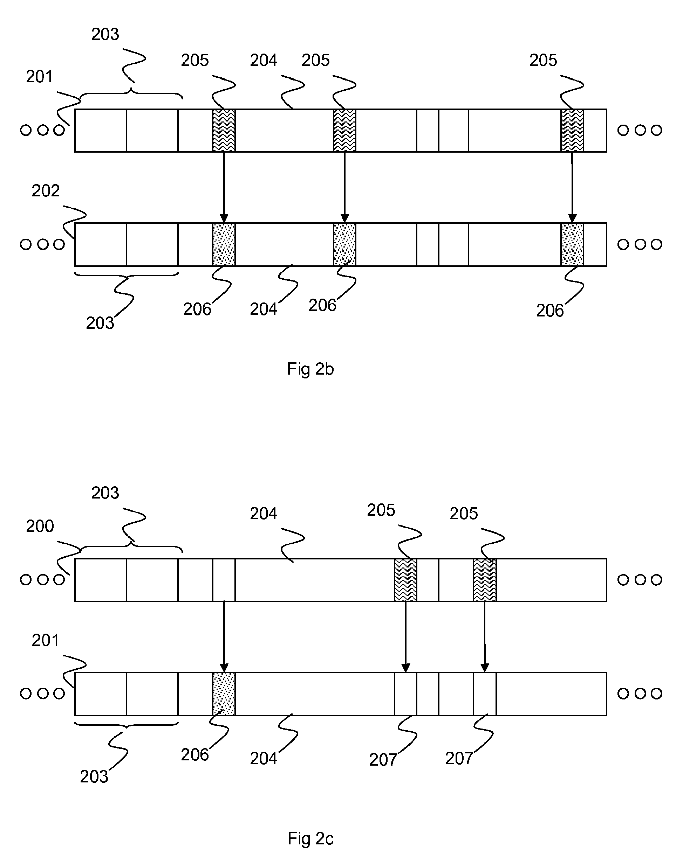

**Figures 2a****,** **2b, 2c** illustrate corrupted bit-stream and watermarked and/or repaired bit-stream according to three particular embodiments. In a first embodiment, the corrupted blocks are replaced by both watermarked blocks and original blocks as represented in **figure 2a**. In a second embodiment, the corrupted blocks are replaced by watermarked blocks only as represented in **figure 2****b.** In a third embodiment, the corrupted blocks are replaced by original blocks only as represented in **figure 2c****.**

The principle of the invention relies on the second embodiment: if corrupted blocks are not substituted by watermarked blocks in the simultaneous watermark and repair step, the rendered content suffers of a major degradation of its perceptual quality. This baseline principle is further improved by the first embodiment. By randomly adding additional corrupted blocks, the position of watermarked blocks is advantageously obfuscated in the corrupted bit-stream. Besides, the perceptual quality of a bit-stream comprising additional corrupted blocks is further degraded. In this embodiment, additional corrupted blocks are replaced by original blocks. Finally, as long as a single watermark and repair step performs the substitution of corrupted blocks, the corruption of blocks randomly selected according the third embodiment is a sufficient condition to guarantee that the content is watermarked and repaired. As a result, watermarked blocks 206 do not necessarily replace a corrupted blocks in this embodiment.

The selection of the positions of the corrupted blocks is now described. **Figure 2a** represents an original bit-stream 200, a corrupted bit-stream 201 and a watermarked and repaired bit-stream 202. The original bit-stream 200 comprises header blocks 203 (such as SPS, PPS in h.264) and essence blocks 204, i.e blocks not dedicated to the transport protocol but carrying audio/video content (such as a slice in h.264).

A watermarking algorithm is applied to the original bit-stream. The invention is compliant with any known substitution-based watermarking algorithm working directly in the bit-stream. The watermarking algorithm determines positions in the bit-stream of blocks that are fit to carry watermark information. The watermarking algorithm also determines, for each selected block, a block value associated to each possible watermark symbol. For instance if the embedded symbols are taken from a binary alphabet {0,1}, the watermarking algorithm determines, for each symbol to be embedded, a watermark block position, a watermark block value for '1' and a watermarked block value for '0',

A complementary algorithm determines additional positions for inserting corrupted blocks. In a variant, the positions are randomly selected. In any case, the positions of these supplementary corrupted blocks are advantageously selected so as to avoid (i) header blocks 203, (ii) essence blocks 204 already selected by the watermarking algorithm, and (iii) essence blocks 204 carrying format-specific escape codes e.g. start code prevention emulation in h.264.

The corrupted bit-stream 201 thus comprises untouched header blocks 203, untouched essence blocks 204, and corrupted essence blocks 205 inserted into the bit-stream.

After the watermark and repair step, in addition to header blocks 203 and untouched essence blocks 204, the repaired bit-stream comprises both watermarked essence blocks 206 and restored original essence blocks 207 at the locations of corrupted blocks.

Whatever the method to select the position of the corrupted block, the value of the corrupted blocks are determined among fixed values, random values or values derived from a watermarking algorithm. In this later case, a watermarking algorithm provides information about the perceptual visibility of a block value modification. Thus, if a block value with low perceptual visual impact is selected for embedding a watermark, a block value having a high perceptual visual impact is preferred for corruption of a bit-stream.

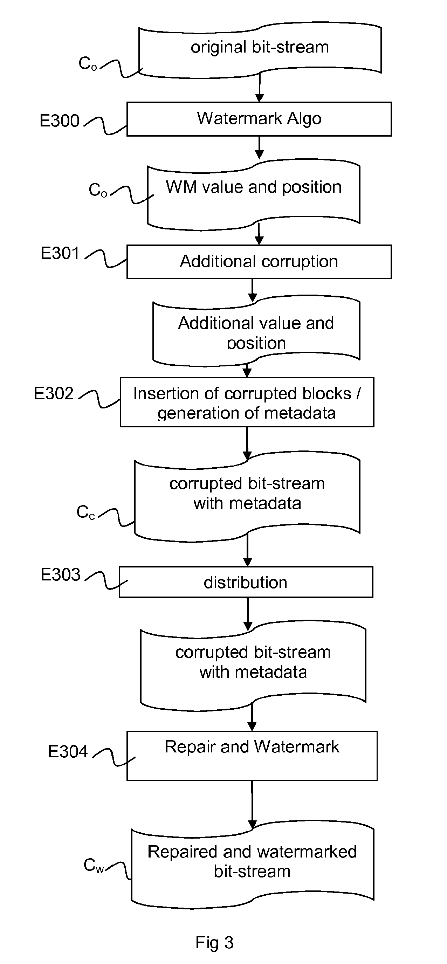

**Figure 3** represents the method for preventing the bypassing of watermarks embedding according to a preferred embodiment. This embodiment combines the corruption of blocks whose locations have been determined both randomly and by the watermark algorithm, and a distribution of the corrupted bit-stream to the end user.

In a first step E300, a watermarking algorithm is applied to an original bit-stream Cₒ. Watermarked values and positions 300 are determined as described in figure 2a for each block and memorized. In a second step E301, an algorithm determines additional blocks intended to be replaced by corrupted blocks. Original block values and positions are also memorized. In variant embodiments, the determination of corrupted block position is performed either by the watermark algorithm only (step E300), either by a random algorithm (step E301) only, or both algorithms. Thus one of the two steps E300 or E301 can be bypassed.

In step E302, corrupted blocks are inserted in the bit-stream at the position determined by step E300 and step E301. In the same step E302, metadata is generated to convey necessary information to watermark and repair the bit-stream. Therefore, the metadata comprises, for each watermarked block, a value for each possible watermark symbol and a position. In a variant, the metadata comprises for each additional block, the original value and a position. In another variant, the metadata also comprises the value of each corrupted block in order to check the integrity of the corrupted bit-stream C_{c} prior to watermarking and repairing it.

In step E303, the corrupted bit-stream is distributed from the content provider to end users. Any distributions means is compatible with the invention for instance broadcast on a cable network, multicast on an IP network. Besides, in a preferred embodiment, the corrupted bit-stream and the metadata associated to it are distributed jointly. For instance, the metadata can be advantageously interleaved within a h.264 bit-stream by using SEI NALUs with a proprietary unique identifier. Doing so, the metadata is granted the same protection as the content during its transport. In a variant, the metadata and the corrupted content are distributed separately. For instance, the content is streamed over a cable network while the metadata is separately downloaded on a user computer. Besides, distribution also covers the file transfer of the bit-stream in a professional environment.

In step E304, the received corrupted bit-stream C_{c} is simultaneously repaired and watermarked thanks to the information available in the metadata. The repair and watermark step consists in substituting each corrupted block whose position is indicated in the metadata, by one of the values associated to the block, also comprised in the metadata. The substitution value corresponds either to the original block value or to a collection of watermarked block values. In the latter case, the value selected for substitution depends of the specific symbol (for instance '0' or '1') that has to be inserted at this position in the bit-stream. In an improvement, the step E304 also checks the integrity of the corrupted bit-stream. This verification process verifies whether, at the positions indicated in the metadata, the block value in the corrupted bit-stream is equal to the corrupted block value specified in the metadata. When the verification succeeds, the corrupted bit-stream is watermarked and repaired as previously described. In that case, the step E304 produces a repaired and watermarked bit-stream C_{w}. When the verification fails, the corrupted stream is not repaired and additional blocks in the bit-stream are corrupted, further degrading the perceptual quality of the multimedia content. Indeed, up to all essence blocks, i.e not header blocks, are replaced by corrupted blocks thus providing a useless "blank" content to the user.

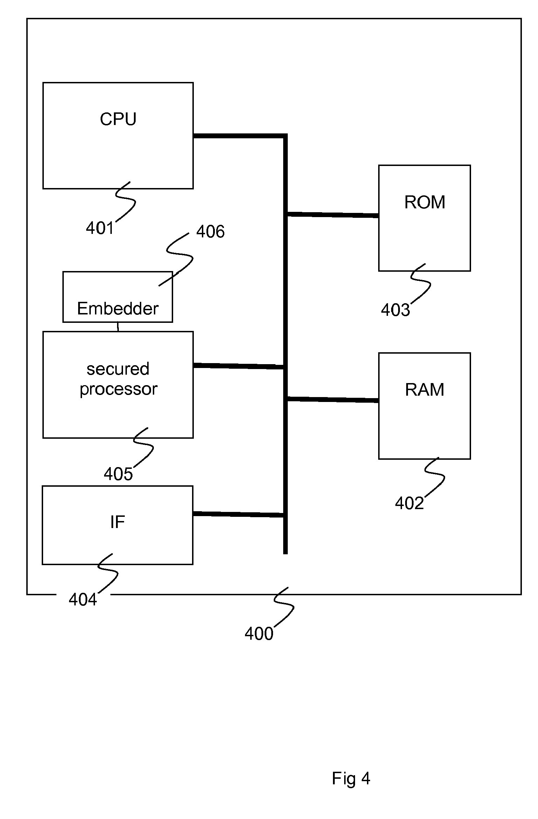

**Figure 4** illustrates a device for watermarking and repairing a bit-stream according to another particular embodiment. The device is for instance a set top box for digital TV connected to a broadcast network, a gateway connected to an IP network, a computer or any device able to get a corrupted bit-stream. The device 400 comprises physical means intended to implement an embodiment of the invention, for instance a processor 401 (CPU), a data memory 402 (RAM or HDD), a program memory 403 (ROM), a network interface 404 (IF) a secured processor 405 linked to a hardware embedder 406. The secured processor 405 is provided with tamper resistant memory. The secure processor provides a secure environment for descrambling a content, storing key material, a device identifier. This identifier, or information derived from it, is watermarked in the corrupted bit-stream according to an embodiment of the invention. The identifier is used to identify the source of an illegal copy.

According to an embodiment, an end user receives a corrupted bit-stream and associated metadata through the network interface. The corrupted bit-stream is temporarily stored in the data memory. As known from the skilled in the art, bit-stream representative of audio/video data are preferably protected before distribution. When the user accesses the corrupted bit-stream, this latter is processed in the secured processor for known protection removal (e.g. descrambling), but also watermarking and repairing. The secured processor 405 is for instance equipped with a hardware embedder 406. In a variant, a software embedder is implemented in the secured processor. The received corrupted bit-stream C_{c} is simultaneously repaired and watermarked thanks to the information available in the metadata in the embedder. The embedder substitutes each corrupted block whose position is indicated in the metadata, by one of the values associated to the block, also comprised in the metadata. The substitution value corresponds either to the original block value or to a collection of watermarked block values. In the latter case, the value selected for substitution depends of the specific symbol (for instance '0' or '1') that has to be inserted at this position in the bit-stream according to the information to watermark.

In a variant, the device also comprises means to check the integrity of the corrupted bit-stream according to an embodiment of the invention.

In further processing dependant of the device, the repaired and watermarked bit-stream is decoded in the processor 401 and send towards rendering means such as a digital screen. In a variant, the repaired and watermarked bit-stream is exported through a home network to another user device.

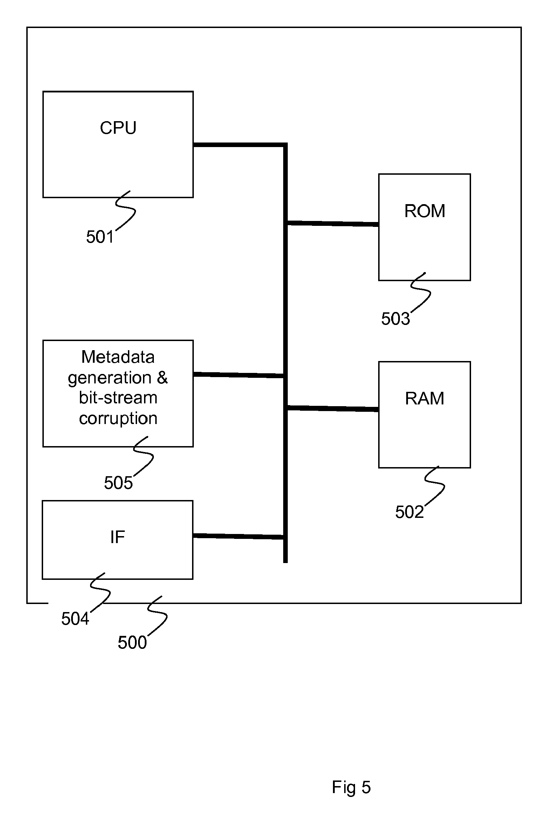

**Figure 5** illustrates a device for preparing a corrupted bit-stream according to another particular embodiment. The device is for instance a computer at content provider or any device intended to process original bit-stream. The device 500 comprises physical means intended to implement an embodiment of the invention, for instance a processor 501 (CPU), a data memory 502 (RAM, HDD), a program memory 503 (ROM), a network interface 504 (IF) and means for corrupting a bit-stream and generating metadata 406. This latter component 406 comprises means to execute a watermark algorithm on the original bit-stream determining, for each watermarked block, a value for each possible watermark symbol and a position. The possible watermarked block values and position is memorized for each block. In a refinement, this component 506 further comprises means to randomly determine additional corrupted blocks positions among remaining blocks carrying audio/video data. Original block value and position is also memorized for each block. This component further comprises means to generate values for corrupted blocks: a constant value, a random value, or a value possibly derived from some prior information coming for instance from the watermarking algorithm. This component 506 replaces original blocks in the bit-stream by corrupted blocks at the positions determined either by the watermark algorithm or at random, thus producing a corrupted bit-stream. This component 506 also generates metadata associated to the corrupted bit-stream according to memorized value and position. According to different variant, the metadata are distributed in-band or out-of-band, i.e with the bit-stream or separately from the bit-stream.

## Claims

1. Method for preventing the bypassing of watermark embedding in a bit-stream (Cₒ) representative of audio/video data **characterized in that** the method comprises :
- a step of corrupting (E100) the bit-stream wherein original blocks in the bit-stream are replaced by corrupted blocks producing a bit-stream (C_{c}) whose perceptual quality is degraded ;
- a step of simultaneously watermarking and repairing (E101) the corrupted bit-stream (C_{c}) wherein corrupted blocks are replaced either by watermarked blocks or original blocks producing a repaired and watermarked bit-stream (C_{w}) whose perceptual quality is recovered.

2. Method according to claim 1 **characterized in that** in the step of corrupting (E100) the bit-stream, the corrupted blocks positions are determined according to a watermarking algorithm.

3. Method according to claim 1 or 2 **characterized in that** in the step of corrupting (E100) the bit-stream, the corrupted blocks values are determined among fixed values, random values or values derived from a watermarking algorithm.

4. Method according to claim 2 **characterized in that** the step of corrupting (E100) the bit-stream further comprises a step of generating metadata comprising, for each corrupted block, a value for each possible watermark symbol and a position.

5. Method according to any of claims 1 to 4 **characterized in that** in the step of corrupting (E100) the bit-stream, additional corrupted blocks positions are randomly determined among blocks carrying audio/video data.

6. Method according to claim 5 **characterized in that** the step of corrupting (E100) the bit-stream further comprises a step of generating metadata comprising, for each additional corrupted block, the original block value and a position.

7. Method according to any of claims 1 to 6 characterized that the step of corrupting (E100) the bit-stream further comprises a step of generating metadata comprising, for each corrupted block, the corrupted block value.

8. Method according to any of claims 1 to 7 **characterized in that** between the step of corrupting (E100) the bit-stream and the step of watermarking and repairing (E101), the method further comprises a step of distributing the corrupted bit-stream.

9. Method according to any of claims 4, 6 or 7 **characterized in that** between the step of corrupting (E100) the bit-stream and the step of watermarking and repairing (E101), the method further comprises a step of distributing the corrupted bit-stream and the generated metadata.

10. Method according to any of claims 4, 6 or 7 **characterized in that** the step of watermarking and repairing (E101) consists of replacing each corrupted block whose position is included in the metadata by one of the values also included in the metadata associated to that block.

11. Method according to claim 7 **characterized in that** before the step of watermarking and repairing (E100), the method further comprises a step of verifying that, for each corrupted position, the value of the block in the corrupted bit-stream and the value indicated in the metadata are equal;
- when the verification succeeds, the corrupted bit-stream is watermarked and repaired;
- when the verification fails, the corrupted bit-stream is not watermarked and repaired, and an action is taken.

12. Method according to claim 11 **characterized in that** when the verification fails, the corrupted bit-stream is not watermarked and repaired, and a plurality of further additional blocks in the bit-stream are corrupted, further impairing the perceptual quality of the bit-stream.

13. Device for watermarking and repairing (400) a corrupted bit-stream whose perceptual quality is degraded, wherein the original bit-stream is representative of audio/video data, the device being **characterized in that** it comprises :
- means to determine an information to watermark;
- an embedder (406) to watermark and repair the corrupted bit-stream wherein corrupted blocks are replaced either by watermarked blocks according to said information to watermark or original blocks thus producing a repaired and watermarked bit-stream whose perceptual quality is recovered.

14. Device for preparing (500) a corrupted bit-stream, wherein the original bit-stream is representative of audio/video data, the device being **characterized in that** it comprises :
- means (505) to apply a watermark algorithm to the original bit-stream determining, for each watermarked block, a value for each possible watermark symbol and a position ;
- means (505) to replace original blocks in the bit-stream by corrupted blocks at the positions determined either by the watermark algorithm or at random, thus producing a bit-stream whose perceptual quality is degraded.

15. Device according to claim 14, wherein the device further comprises :
- means to randomly determine additional corrupted blocks positions among blocks carrying audio/video data.
